# EUROPÄISCHE PATENTSCHRIFT

(11) **EP 4 538 666 B1**
(45) Veröffentlichungstag und Bekanntmachung des Hinweises auf die Patenterteilung: **23.09.2026**
(21) Anmeldenummer: 24195234.0
(22) Anmeldetag: 19.08.2024
(51) Int. Cl.: G01L 19/00, G01L 19/06

(54) **VORRICHTUNG DER PROZESSFLUIDTECHNIK ZUR LECKAGEÜBERWACHUNG**
DEVICE FOR PROCESS FLUID TECHNOLOGY FOR MONITORING LEAKS
DISPOSITIF DE LA TECHNIQUE DU FLUIDE DE TRAITEMENT POUR LA SURVEILLANCE DE FUITES

(30) Priorität: 09.10.2023 DE 102023127545
(43) Veröffentlichungstag der Anmeldung: 16.04.2025
(73) Patentinhaber: GEMÜ Gebr. Müller Apparatebau GmbH & Co. Kommanditgesellschaft, 74653 Ingelfingen (DE)
(72) Erfinder: Rupp, Martin, 74673 Mulfingen (DE)
(74) Vertreter: DREISS Patentanwälte PartG mbB

(56) Entgegenhaltungen:
- WO-A1-2023/088584
- US-A- 3 789 297
- US-A- 5 869 766

## Beschreibung

Die Erfindung betrifft eine Vorrichtung der Prozessfluidtechnik zur Leckageüberwachung.

Leckagen in Prozessanlagen können zu Ausfällen führen. Deshalb müssen Dichtbereiche, die einen Prozessfluid führenden Bereich von einem trockenen Bereich abtrennen, überwacht werden. Bekannt sind sogenannte Leckagebohrungen, die durch Austritt von Fluid an einer äußeren Öffnung der Leckagebohrung die Leckage visuell anzeigen.

Die US 3 789 297 A offenbart eine Vorrichtung zum Testen einer Flüssigkeitsdichtigkeit einer abgedichteten Verbindung, bestehend aus, einem elektrisch leitenden Körper mit einem Ventilsitz und mit einer Dichtfläche, einer Dichtung, die gegen die Dichtfläche gedrückt wird, wobei die Dichtung fest und dicht mit einem getragenen Ventilteller verbunden ist der an einer Ventilspindel angeordnet ist. Der Körper ist durch einen Fluidkanal von einem ersten Fluidanschluss zu einem zweiten Fulidanschluss von einer Flüssigkeit durchfließbar. Weiter wird eine ringförmige Elektrode offenbart, wobei die Elektrode im Betrieb der Vorrichtung mit der Flüssigkeit in Kontakt gebracht wird. Eine Isolierung ist zwischen der ringförmigen Elektrode und der Dichtfläche des Körpers angeordnet. Ein Gerät zur Anzeige der Konduktivität zwischen der Dichtfläche des Körpers und der Elektrode über die Isolierung hinweg ist ferner offenbart.

Die Probleme des Standes der Technik werden durch eine Vorrichtung gemäß dem Anspruch 1 gelöst.

Ein Aspekt der Beschreibung betrifft eine Vorrichtung der Prozessfluidtechnik umfassend einen Körper mit wenigstens einem Fluidanschluss, welcher in einen Fluidkanal im Inneren des Körpers führt, wobei der Körper wenigstens eine weitere, einer Funktionseinheit zugeordnete Öffnung, welche in den Fluidkanal führt, umfasst; und die lösbar an dem Körper angeordnete Funktionseinheit, welche die weitere Öffnung des Körpers entlang eines Dichtbereichs verschließt, wobei der Dichtbereich einen fluidführenden Abschnitt der Vorrichtung von einem Trockenraum der Vorrichtung trennt, wobei wenigstens ein in dem Trockenraum angeordneter Sensor dazu eingerichtet ist, ein Sensorsignal zu erzeugen, welches einen Eintritt von Prozessfluid in den Trockenraum indiziert.

Vorteilhaft dient die Vorrichtung einer Herbeiführung einer digitalen Ja/Nein-Entscheidung dahingehend, ob der Dichtbereich noch voll funktionsfähig ist oder nicht. Vorteilhaft kann damit eine frühzeitige und sichere Leckageerkennung nahe an dem Dichtbereich stattfinden.

Eine frühzeitige Warnung bei Undichtigkeiten, auch an Anlagenstellen bei welchem das Produkt nicht direkt einsehbar ist, wird ermöglicht. Eine Kostenersparnis auf Grund von frühzeitigem Eingreifen wird erreicht, was vor allem im Semiconductor-Bereich Kostenvorteile realisiert. Eine einfache und schnelle Verarbeitung bzw. Weiterleitung eines aus dem Sensorsignal abgeleiteten Alarmsignales an eine Zentralsteuerung wird ermöglicht.

Durch das bereitgestellte Baukastenprinzip kann eine Nachrüstung der Leckageerkennung durchgeführt werden.

Es wird also eine einfache Integration der Leckageerkennung bereitgestellt. Dementsprechend kann auf teure und externe Sensorik verzichtet werden, welches wiederrum vorteilhaft Kosten und notwendigen Bauraum reduziert.

Ein vorteilhaftes Beispiel zeichnet sich dadurch aus, dass eine der Funktionseinheit zugeordnete Kontur auf eine dem Körper zugeordnete Gegenkontur gedrückt den Dichtbereich bereitstellt, wobei sich die Funktionseinheit für das Aufdrücken der Kontur auf die Gegenkontur an dem Körper abstützt.

Ergibt sich im Bereich des Dichtabschnitts eine Leckage, so tritt das Fluid zunächst in den Trockenraum ein, wo es unmittelbar auf den Sensor trifft, der wiederum das Signal erzeugt.

Ein vorteilhaftes Beispiel zeichnet sich dadurch aus, dass der Trockenraum den Dichtbereich lateral wenigstens abschnittsweise umgibt.

Dadurch, dass der Trockenraum den Dichtabschnitt umgibt, ist sichergestellt, dass es zu keiner undetektierbaren Leckage im Bereich des Dichtabschnitts kommen kann. So findet eine vollständige Überwachung des Dichtbereichs statt.

Erfindungsgemäß umfasst die Funktionseinheit wenigstens einen sich an der Funktionseinheit abstützenden, insbesondere federnd abstützenden, Niederhalter, welcher den wenigstens einen Sensor auf eine dem Körper zugeordnete Oberfläche des Trockenraums drückt. Vorteilhaft wird damit eine klebefreie Befestigung des Sensors nahe am fluidführenden Bereich der Vorrichtung realisiert.

Erfindungsgemäß umfasst der wenigstens eine Niederhalter einen elektrisch leitfähigen distalen Kontakt, welcher auf einen elektrisch leitfähigen Gegenkontakt des Sensors drückt.

Vorteilhaft wird damit die mechanische Festlegung des Sensors mit einer elektrischen Kontaktierung kombiniert. Weitergehend wird für die Leckageerkennung in der Nähe des Dichtbereichs nur eine reduzierte Anzahl an Materialien benötigt, was die Zertifizierung der Vorrichtung vereinfacht und den Anwendungsbereich der Vorrichtung vergrößert.

Ein vorteilhaftes Beispiel zeichnet sich dadurch aus, dass eine gedachte zur weiteren Öffnung des Körpers lotrecht verlaufende Achse durch einen inneren Funktionsabschnitt der Funktionseinheit verläuft, wobei der wenigstens eine Niederhalter in der Funktionseinheit in Bezug zur gedachten Achse außerhalb des inneren Funktionsabschnitts befindet.

Damit ist der wenigstens eine Niederhalter funktional von dem inneren Funktionsabschnitt entkoppelt und beeinflusst nicht die Funktion des inneren Funktionsabschnitts.

Ein vorteilhaftes Beispiel zeichnet sich dadurch aus, dass der wenigstens eine Sensor einen Träger und wenigstens eine auf dem Träger angeordnete Leiterbahn umfasst.

Vorteilhaft kann damit eine einfach zu fertigende Leiterplatte verwendet werden, um den Sensor zu realisieren.

Ein vorteilhaftes Beispiel zeichnet sich dadurch aus, dass der wenigstens eine Sensor eine Mehrzahl von Leiterbahnen umfasst, welche wenigstens abschnittsweise einer gedachten Umfangsstrecke verlaufen. Vorteilhaft kann hierdurch ein äquidistanter Verlauf wenigstens zweier Leiterbahnen realisiert werden, womit das erzeugte die Leckage indizierende Signal unabhängig von der Stelle, an der die Leckage auftritt, im Wesentlichen gleich stark ausgeprägt ist.

Ein vorteilhaftes Beispiel zeichnet sich dadurch aus, dass der Träger wenigstens abschnittsweise kreisringförmig ausgebildet ist und wenigstens eine Öffnung, insbesondere eine Durchgangsöffnung, umfasst, welche von der wenigstens einen Leiterbahn zumindest abschnittsweise umgeben ist.

Durch die kreisringförmige Ausprägung kann der Sensor in den Trockenraum eingelegt werden und umgibt damit den Dichtbereich vollständig.

Ein vorteilhaftes Beispiel zeichnet sich dadurch aus, dass der wenigstens eine Sensor in einer den Trockenraum abschnittsweise begrenzenden Ausnehmung des Körpers aufgenommen ist, wobei die Ausnehmung einer Außenkontur des wenigstens einen Sensors, insbesondere des Trägers des Sensors folgt.

Damit vereinfacht sich die Montage des Sensors, da die Ausnehmung bereits durch Ihre Innenkontur die Außenkontur des Sensors nachahmt. Folglich ist für den Monteur einfach ersichtlich, an welcher Stelle der Sensor angeordnet werden muss.

Ein vorteilhaftes Beispiel zeichnet sich dadurch aus, dass ein Leckagekanal den Trockenraum mit einem Außenraum der Vorrichtung verbindet.

Vorteilhaft kann eindringendes Prozessfluid aus dem Trockenraum abtransportiert werden und stellt damit die Möglichkeit einer Sichtkontrolle einer Leckage bereit.

Ein vorteilhaftes Beispiel zeichnet sich dadurch aus, dass der wenigstens eine Sensor dazu eingerichtet ist, wenigstens ein weiteres Signal zu ermitteln, welches einen Parameter des mit dem wenigstens einen Sensor in Kontakt stehenden Fluids charakterisiert.

Beispielsweise kann somit unterschieden werden, ob Prozessfluid oder gar ein anderes Fluid mit dem wenigstens einen Sensor in Kontakt steht. Der Parameter kann beispielsweise einen Feuchtegrad, eine Temperatur, eine Leitfähigkeit oder ein elektrischer Widerstand sein.

Ein vorteilhaftes Beispiel zeichnet sich dadurch aus, dass eine Warnvorrichtung der Vorrichtung dazu eingerichtet ist, ein optisches Warnsignal zu erzeugen, sobald das Sensorsignal den Eintritt von Prozessfluid in den Trockenraum indiziert.

Bei Kontrollläufen oder Wartungsarbeiten ist der Dichtheitszustand somit einfach überprüfbar. Vorteilhaft kann so frühzeitig vom Wartungspersonal erkannt werden, dass eine Leckage vorhanden ist. Entsprechen früh können Gegenmaßnahmen eingeleitet werden. Das frühzeitige Eingreifen wiederum hat das Potenzial die Prozessanlage kosteneffizienter zu betreiben, da weniger Batches des jeweiligen erzeugen Produktes durch Leckagefälle verloren gehen.

Ein vorteilhaftes Beispiel zeichnet sich dadurch aus, dass die Funktionseinheit einen weiteren Sensor umfasst, welcher dazu eingerichtet ist, wenigstens ein Signal zu erzeugen, welches wenigstens einen Parameter des in dem fluidführenden Abschnitt befindlichen Prozessfluids charakterisiert.

Vorteilhaft wird damit eine Sensorvorrichtung bereitgestellt, deren Leckage einfach überwacht wird.

Ein vorteilhaftes Beispiel zeichnet sich dadurch aus, dass die Funktionseinheit einen Absperrkörper und einen Prozessarmatur-Antrieb für den Absperrkörper umfasst, wobei eine Position des Absperrkörpers in Bezug zu einer Schließkontur des Körpers einen wirksamen Durchfluss zwischen wenigstens zwei Prozessfluid-Anschlüssen begrenzt.

Vorteilhaft wird damit eine Prozessarmatur bereitgestellt, deren Dichtheit nach außen besser überwacht werden kann.

In der Zeichnung zeigen:
- Figur 1: in einer Schnittansicht eine Vorrichtung der Prozessfluidtechnik;
- Figur 2: die Vorrichtung aus Figur 1 in einem weiteren Schnitt;
- Figur 3: zeigt einen Sensor in einer perspektivischen Darstellung;
- Figur 4: zeigt einen Ausschnitt der Vorrichtung mit einem Dichtbereich in einer weiteren Schnittdarstellung; und
- Figur 5: ein weiteres Beispiel der Vorrichtung, außerhalb des Schutzbereiches der Ansprüche.

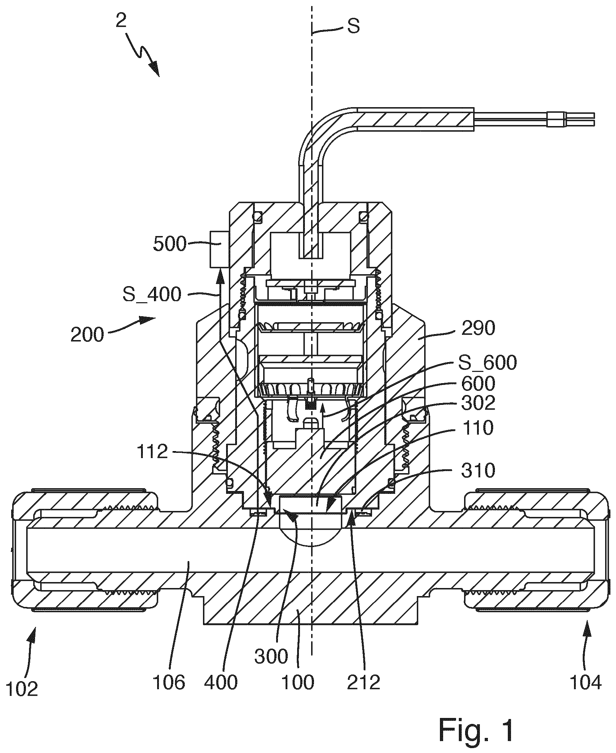

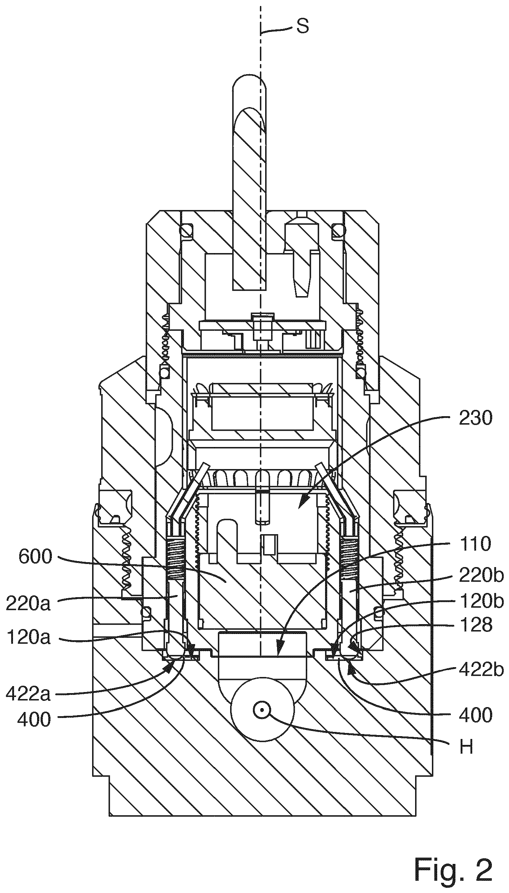

Figur 1 zeigt in einem Schnitt eine Vorrichtung 2 der Prozessfluidtechnik. Figur 2 zeigt in einem zur Hauptströmungsrichtung H lotrechten Schnitt die Vorrichtung 2 aus Figur 1. Im Folgenden wird auf beide Figuren 1 und 2 eingegangen. Die Vorrichtung 2 umfasst einen Körper 100 mit wenigstens einem Fluidanschluss 102, 104, welcher in einen Fluidkanal 106 im Inneren des Körpers 100 führt, wobei der Körper 100 wenigstens eine weitere, einer Funktionseinheit 200 zugeordnete Öffnung 110, welche in den Fluidkanal 106 führt, umfasst. Des Weiteren umfasst die Vorrichtung 2 die lösbar an dem Körper 100 angeordnete Funktionseinheit 200, welche die weitere Öffnung 110 des Körpers 100 entlang eines Dichtbereichs 300 verschließt, wobei der Dichtbereich 300 einen fluidführenden Abschnitt 302 der Vorrichtung 2 von einem Trockenraum 310 der Vorrichtung 2 trennt. Wenigstens ein in dem Trockenraum 310 angeordneter Sensor 400 ist dazu eingerichtet, ein Sensorsignal S_400 zu erzeugen, welches einen Eintritt von Prozessfluid in den Trockenraum 310 indiziert.

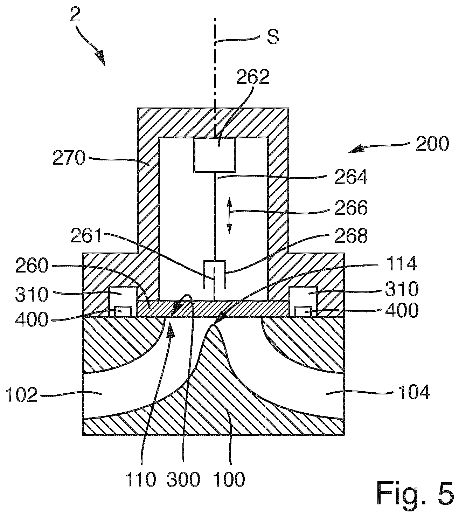

Die Funktionseinheit 200 stellt eine Funktion bereit. Im gezeigten Beispiel umfasst die Funktionseinheit einen Sensor 600, der ein Signal S_600 erzeugt. Selbstverständlich kann die Funktionseinheit 200 auch andere Funktionen bereitstellen, was beispielsweise anhand der nachfolgenden Figur 5 näher erläutert wird.

Der Dichtbereich 300 repräsentiert einen Bereich, in dem die Funktionseinheit 200 und der Körper 100 miteinander verspannt sind und eine Dichtheit der Vorrichtung 2 nach außen bereitstellen. Der fluidführende Abschnitt 302 ist von dem Trockenraum 310 durch den Dichtbereich 300 separiert und abgetrennt.

Im Normalbetrieb der Vorrichtung 2 tritt kein Prozessfluid aus dem fluidführenden Abschnitt 302 der Vorrichtung 2 über den Dichtbereich 300 in den Trockenraum 310 ein. Tritt dennoch aufgrund einer Fehlmontage, einer Materialermüdung oder aus anderen Gründen Prozessfluid über den Dichtbereich 300 in den Trockenraum 310 ein, so füllt sich dieser langsam mit Prozessfluid bzw. einzelne Tropfen von Prozessfluid treten in den Trockenraum 310 ein. Ist dies der Fall, so trifft das Prozessfluid auf den Sensor 400 und der Sensor 400 erzeugt das Sensorsignal S_400, welches die eingetretene Leckagesituation anzeigt.

Der Trockenraum 310 umschließt den Dichtbereich 300 kreisringförmig. Der Trockenraum 310 wird zu einem Teil von der Funktionseinheit 200 oder einem der Funktionseinheit 200 zugeordneten Abschnitt und zu einem anderen Teil von dem Körper 100 oder einem dem Körper 100 zugeordneten Abschnitt begrenzt.

Eine der Funktionseinheit 200 zugeordnete Kontur 212 wird auf eine dem Körper 100 zugeordnete Gegenkontur 112 gedrückt, womit der Dichtbereich 300 bereitstellt wird. Die Funktionseinheit 200 stützt sich für das Aufdrücken der Kontur 212 auf die Gegenkontur 112 an dem Körper 100 ab.

Damit sich die Funktionseinheit 200 an dem Körper 100 abstützt und eine Dichtung im Dichtbereich 300 bereitstellen kann, ist die Funktionseinheit 200 beispielsweise mit einer Überwurfmutter 290, welche mit ihrem Außengewinde in ein Innengewinde des Körpers 100 eingreift, gesichert. Mittels der Überwurfmutter 290 wird die erforderliche Anpresskraft für das Anpressen der Funktionseinheit 200 an den Körper 100 im Dichtbereich 300 bereitgestellt und die Dichtheit nach außen wird bereitgestellt. Hierzu greift die Überwurfmutter 290 in eine vom Körper 100 abgewandte Gegenkontur der Funktionseinheit 200 ein.

Der Trockenraum 310 umgibt den Dichtbereich 300 lateral wenigstens abschnittsweise.

Die Funktionseinheit 200 umfasst wenigstens einen sich an der Funktionseinheit 200 abstützenden, insbesondere federnd abstützenden, Niederhalter 220a-b. Der wenigstens eine Niederhalter 220a-b drückt bei der an dem Körper 100 angeordneten Funktionseinheit 200 den wenigstens einen Sensor 400 auf eine dem Körper 100 zugeordnete Oberfläche 120a-b des Trockenraums 310. So wird der Sensor 400 zur der Vorrichtung 2 festgelegt.

Der Niederhalter 220a-b wird also von einer Federkraft beaufschlagt stets in Richtung Körper 100 gedrückt. Damit wird sowohl der Sensor 400 dauerhaft festgelegt als auch der Sensor 400 elektrisch kontaktiert. In einem unbelasteten Zustand steht der jeweilige Niederhalter 220a-b also weiter aus der zugeordneten Aufnahmeöffnung der Funktionseinheit 200 hervor als im Vergleich zu dem Fall, in dem die Funktionseinheit 200 an dem Körper 100 angeordnet ist und der Niederhalte 220a-b den Sensor 400 in Richtung des Körpers mit seiner Federkraft beaufschlagt.

Der wenigstens eine Niederhalter 220a-b umfasst einen elektrisch leitfähigen distalen Kontakt 222a-b, welcher im montierten Zustand von Körper 100 und Funktionseinheit 200 auf einen elektrisch leitfähigen Gegenkontakt 422a-b des Sensors 400 drückt.

Der Kontakt 222a-b umfasst beispielsweise eine elektrisch leitfähige konvexe Oberfläche, um den eben ausgebildeten elektrischen Gegenkontakt elektrisch und mechanisch zu kontaktieren.

Eine gedachte zur weiteren Öffnung 110 des Körpers 100 lotrecht verlaufende Achse S verläuft durch einen inneren Funktionsabschnitt 230 der Funktionseinheit 200, wobei der wenigstens eine Niederhalter 220a-b in der Funktionseinheit 200 in Bezug zur gedachten Achse S außerhalb des inneren Funktionsabschnitts 230 angeordnet ist. Vielmehr ist der wenigstens eine Niederhalter 220a-b in einer jeweiligen Öffnung oder Durchgangsöffnung der Funktionseinheit 200 angeordnet, wobei die Öffnung bzw. Durchgangsöffnung parallel zur Achse S verläuft.

Der wenigstens eine Sensor 400 ist in einer den Trockenraum 310 abschnittsweise begrenzenden Ausnehmung 128 des Körpers 100 aufgenommen. Die Ausnehmung 128 folgt wenigstens einer Außenkontur des wenigstens einen Sensors 400, insbesondere des Trägers 410 des Sensors 400. Die Ausnehmung 128 folgt also einer schmalseitigen Außen- und/oder Innenkontur des wenigstens einen Sensors 400. Insbesondere wird durch die Ausnehmung 128 ein zur Achse S lotrechter Formschluss zwischen Sensor 400 und Körper 100 hergestellt.

Der Sensor 400 und sein Träger 410 erstrecken sich in einer Ebene, welche lotrecht zur Achse S ist, welche wiederum lotrecht zur Öffnungskante der weiteren Öffnung 110 des Körpers verläuft. Der Sensor 400 bzw. der Träger 410 folgen damit einer gedachten Ebene, welche parallel zur Öffnung 110 bzw. deren Rand angeordnet ist.

Ein nicht dargestellter Leckagekanal verbindet den Trockenraum 310 mit einem Außenraum der Vorrichtung 2. Damit wird zusätzlich eine visuelle Inspektion der Leckage ermöglicht.

Der wenigstens eine Sensor 400 ist weitergehend dazu eingerichtet, wenigstens ein weiteres Signal zu ermitteln, welches einen Parameter des mit dem wenigstens einen Sensor 400 in Kontakt stehenden Fluids charakterisiert. Beispielsweise kann entweder die Messelektronik entsprechend eingerichtet sein, um beispielsweise neben der digitalen Leckageerkennung eine Leitfähigkeit des Prozessmediums zu ermitteln. In einem weiteren Beispiel ist eine weitere Sensoreinheit auf dem Sensor 400 angeordnet, um beispielsweise eine Temperatur oder andere Parameter im Trockenraum 310 zu ermitteln.

In Figur 1 ist eine Warnvorrichtung 500 gezeigt. Die Warneinrichtung 500 ist dazu eingerichtet, ein optisches und/oder akustisches Warnsignal zu erzeugen, sobald das Sensorsignal S_400 den Eintritt von Prozessfluid in den Trockenraum 310 indiziert.

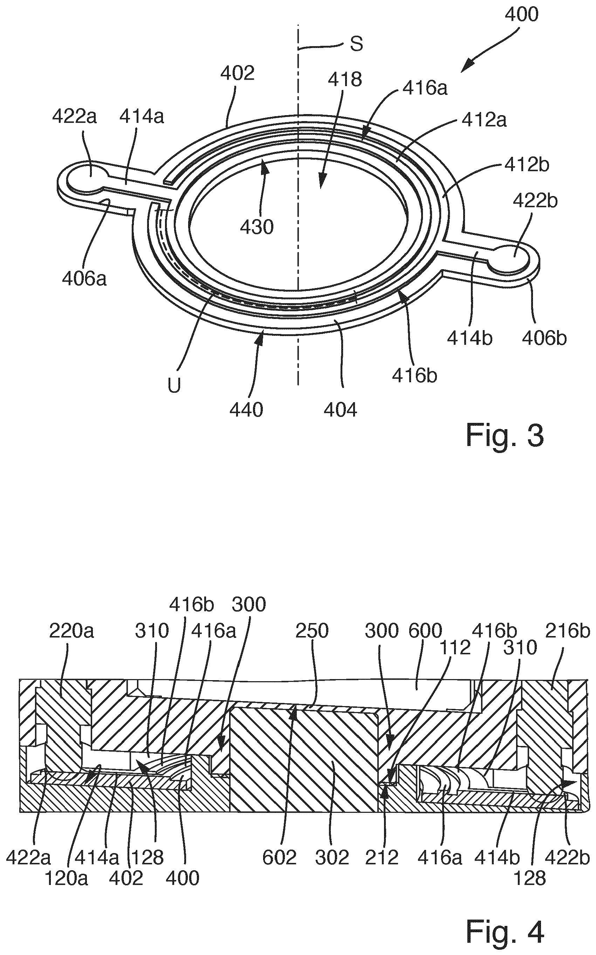

Figur 3 zeigt den Sensor 400 in einer perspektivischen Ansicht. Der wenigstens eine Sensor 400 umfasst einen Träger 410 und wenigstens eine auf dem Träger 410 angeordnete Leiterbahn 412a-b.

Die Ermittlung des Leckagefalls wird durch eine kapazitive oder resistive Messung zwischen den Leiterbahnen 412a-b durchgeführt. Je nach verwendetem Prozessmedium kann die kapazitive Messung oder resistive Messung von Vorteil sein. Beispielsweise könnte eine kapazitive Messung bei elektrisch nicht leitfähigen Prozessmedien sinnvoll sein. Auch können beide Messprinzipien verwendet werden, um den Leckagefall eindeutig zu ermitteln.

Der wenigstens eine Sensor 400 umfasst eine Mehrzahl von Leiterbahnen 412a-b, welche wenigstens abschnittsweise einer gedachten Umfangsstrecke U verlaufen.

Der Träger 402 ist wenigstens abschnittsweise kreisringförmig ausgebildet und umfasst wenigstens eine Öffnung 418, insbesondere eine Durchgangsöffnung, welche von der wenigstens einen Leiterbahn 412ab zumindest abschnittsweise umgeben ist. Die Öffnung 418 wird durch eine innere Schmalseite 430 des Trägers 402 bereitgestellt.

Die zwei Leiterbahnen 412a-b erstrecken sich konzentrisch zueinander und lotrecht zur Achse S um die Durchgangsöffnung 418. Dabei sind die zwei Leiterbahnen 412a-b elektrisch getrennt voneinander auf dem Träger 402 angeordnet. Die Gegenkontakte 422a-b sind jeweils Teil einer zugeordneten der Leiterbahnen 412a-b und als Kontaktpad ausgebildet.

Die Leiterbahnen 412a-b werden über die beiden Gegenkontakte 422a-b kontaktiert. Ein mittels einer nicht gezeigten Betriebseinheit bzw. Messelektronik hergestellter Stromkreis würde durch auf beiden Leiterbahnen 412a-b befindliches elektrisch leitfähiges Prozessfluid geschlossen, wodurch der gemessene Widerstand im Stromkreis sinken und eine Leckage detektiert würde.

Der Träger 402 umfasst von einem Hauptkörper 404 des Trägers 402 abragende Laschen 406a-b, auf denen der zugeordnete Gegenkontakt 422a-b angeordnet ist.

Ausgehend von dem jeweiligen Gegenkontakt 422a-b umfasst die jeweilige Leiterbahn 412a-b einen Zuleitungsabschnitt 414a-b, und einen sich an den Zuleitungsabschnitt 414a-b anschließenden Sensorabschnitt 416a-b.

Der Sensorabschnitt 416a-b verläuft abschnittsweise kreisringförmig um die Durchgangsöffnung. Die Sensorabschnitte 416a-b verlaufen konzentrisch zueinander.

Eine äußere Schmalseite 440 folgt zumindest abschnittsweise einer Innenkontur der Ausnehmung 128 des Körpers 100. Die innere Schmalseite 430 folgt abschnittsweise der Innenkontur der Ausnehmung 128.

Der Körper 100 und die Funktionseinheit 200 umfassen in einem Beispiel eine nicht gezeigte Kodierung, um eine Verdrehposition zueinander festzulegen. Durch eine solche Verdrehsicherung wird sichergestellt, dass der Sensor 400 sicher kontaktiert wird.

Beim Einschrauben einer Messhülse im Sinne der Funktionseinheit 200 aus den Figuren 1 und 2 wird über die elektrischen Kontakte im Sinne der Niederhalter 220a-b eine elektrische Verbindung mit der Leiterplatte im Sinne des Sensors 400 und einer Messelektronik hergestellt und ein geöffneter elektrischer Stromkreis hergestellt.

In einer alternativen Ausführungsform wird ein geschlossener Stromkreis hergestellt. Im Unterschied zur dargestellten Variante ist also beispielsweise wenigstens eine durchgängig leitfähige Leiterbahn zwischen den beiden Niederhaltern 220a-b vorhanden. Bei aggressiven Medien macht dies Sinn, da die Leckageerkennung über einen geschlossenen Stromkreis detektiert wird. Tritt nun Medium aus, wird die Leiterbahn durch Ätzen unterbrochen und eine Signaländerung entsteht. Das ätzende Medium kann hier nicht als leitfähiges Medium angesehen werden, welches den offenen Stromkreis schließt.

In den elektrischen Kontakten ist eine Feder eingebaut, welche die prozesssichere Kontaktierung zur Leiterplatte sicherstellt - auch im Fall von Vibrationen oder thermischen Ausdehnungen. Kommt es im weiteren Verlauf zu einer Undichtigkeit im Dichtbereich 300, dann tritt das Prozessmedium aus und benetzt damit die Leiterplatte im Sinne des Sensors 400 mit den dort kreisringförmig angeordneten Leiterbahnen. Infolgedessen ändert sich der elektrische Widerstand und/oder die Kapazität, welche durch die Messelektronik ermittelt wird. Die Messung lässt Rückschlüsse auf Undichtigkeiten zu und ermöglicht damit die digitale Leckageerkennung.

Figur 4 zeigt in einer Schnittdarstellung die Vorrichtung 2 im Bereich des Dichtbereichs 300. Die Funktionseinheit 200 umfasst im gezeigten Beispiel einen weiteren Sensor 600, welcher dazu eingerichtet ist, wenigstens ein Signal S_600 zu erzeugen, welches wenigstens einen Parameter des in dem fluidführenden Abschnitt 302 befindlichen Prozessfluids charakterisiert.

Der Sensor 600 ist durch eine Membran 250 von dem fluidführenden Abschnitt 302 getrennt. Eine Messoberfläche 602 liegt an der Membran 250 an. Durch die Membran 250 werden beispielsweise Druck und Temperatur des Prozessfluids im fluidführenden Abschnitt 302 an die Messoberfläche 602 weitergegeben. Entsprechend können Druck und/der Temperatur über die Messoberfläche 602 ermittelt werden und gemäß dem wenigstens einen Signal S_600 an eine Überwachungs- oder Steuereinheit übermittelt werden.

Figur 5 zeigt ein weiteres Beispiel der Vorrichtung 2 in einer schematischen Schnittdarstellung, das nicht in den Schutzbereich der Ansprüche fällt. Die Vorrichtung 2 ist als Prozessarmatur ausgebildet. Die Funktionseinheit 200 umfasst einen Absperrkörper 260 und einen Prozessarmatur-Antrieb 262 für den Absperrkörper 260. Eine Position des Absperrkörpers 260 begrenzt in Bezug zu einer Schließkontur 114 des Körpers 100 einen wirksamen Durchfluss zwischen wenigstens zwei Prozessfluid-Anschlüssen 102, 104. Die vorangehende Beschreibung ist insbesondere auf den Trockenraum 310 und den dort angeordneten Sensor 400 auf das Beispiel der Prozessarmatur übertragbar.

Die als Prozessarmatur ausgebildete Vorrichtung 2 umfasst den Absperrkörper 260, welcher mittels des Prozessarmatur-Antriebs 262 auf die Schließkontur 114, also auf einen Ventilsitz, des Körpers 100 aufdrückbar und von dem Ventilsitz weg bewegbar ist. Zur Bewegung des Absperrkörpers 260 ist der Absperrkörper 260 mittels einer Antriebsstange 264 mit dem Prozessarmatur-Antrieb 262 verbunden. Der Prozessarmatur-Antrieb 262 leitet ein Moment bzw. eine Kraft in die Antriebsstange 264 ein, um diese entlang der Stellachse, welche mit der Achse S der weiteren Öffnung 110 zusammenfällt, gemäß dem Doppelpfeil 266 zu bewegen. Die Antriebsstange 264 umfasst eine Verbindungsschnittstelle 268, um den Absperrkörper 260 kraftführend mit der Antriebsstange 264 zu verbinden. Der Dichtbereich 300 befindet sich zwischen dem Körper 100 und dem Absperrkörper 260.

Die Vorrichtung 2 ist im Beispiel der Figur 5 als Membranventil ausgebildet. Beispielsweise ragt von dem als Ventilmembran ausgebildeten Absperrkörper 260 ein Membranstift 261 ab, welcher über die Verbindungsschnittstelle 268 mit der Antriebsstange 264 kraftführend verbunden ist. Der Prozessarmatur-Antrieb 262 umfasst ein Gehäuse 270, wobei die Ventilmembran zwischen dem Gehäuse 270 und dem Körper 100 verspannt ist Selbstverständlich kann auch jedwede andere Art von Prozessarmatur wie ein Sitzventil, ein Regelventil, etc. insbesondere auch eine Absperrklappe mit dem beschriebenen Sensor 400 in dem Trockenraum 310 ausgerüstet werden, um eine Leckage zu detektieren. Der vorangehende Absatz ist deshalb auch auf andere Armaturarten als das dargestellte Membranventil übertragbar. Der Dichtbereich 300 kann sich bei anderen Armaturarten beispielsweise zwischen dem Gehäuse 270 und dem Körper 100 befinden.

## Patentansprüche

1. Vorrichtung (2) der Prozessfluidtechnik umfassend:
einen Körper (100) mit wenigstens einem Fluidanschluss (102, 104), welcher in einen Fluidkanal (106) im Inneren des Körpers (100) führt, wobei der Körper (100) wenigstens eine weitere, einer Funktionseinheit (200) zugeordnete Öffnung (110), welche in den Fluidkanal (106) führt, umfasst; und
die lösbar an dem Körper (100) angeordnete Funktionseinheit (200), welche die weitere Öffnung (110) des Körpers (100) entlang eines Dichtbereichs (300) verschließt, wobei der Dichtbereich (300) einen fluidführenden Abschnitt (302) der Vorrichtung (2) von einem Trockenraum (310) der Vorrichtung (2) trennt, wobei wenigstens ein in dem Trockenraum (310) angeordneter Sensor (400) dazu eingerichtet ist, ein Sensorsignal (S_400) zu erzeugen, welches einen Eintritt von Prozessfluid in den Trockenraum (310) indiziert,
wobei die Funktionseinheit (200) wenigstens einen sich an der Funktionseinheit (200) abstützenden, insbesondere federnd abstützenden, Niederhalter (220a-b) umfasst, welcher den wenigstens einen Sensor (400) auf eine dem Körper (100) zugeordnete Oberfläche (120a-b) des Trockenraums (310) drückt,
**dadurch gekennzeichnet, dass**,
der wenigstens eine Niederhalter (220ab) einen elektrisch leitfähigen distalen Kontakt (222a-b) umfasst, welcher auf einen elektrisch leitfähigen Gegenkontakt (422a-b) des Sensors (400) drückt

2. Die Vorrichtung (2) gemäß dem Anspruch 1, wobei eine der Funktionseinheit (200) zugeordnete Kontur (212) auf eine dem Körper (100) zugeordnete Gegenkontur (112) gedrückt den Dichtbereich (300) bereitstellt, und wobei sich die Funktionseinheit (200) für das Aufdrücken der Kontur (112) auf die Gegenkontur (112) an dem Körper (100) abstützt.

3. Die Vorrichtung (2) gemäß Anspruch 1 oder 2, wobei der Trockenraum (310) den Dichtbereich (310) lateral wenigstens abschnittsweise umgibt.

4. Die Vorrichtung (2) gemäß Anspruch 1, 2 oder 3, wobei eine gedachte zur weiteren Öffnung (110) des Körpers (100) lotrecht verlaufende Achse (S) durch einen inneren Funktionsabschnitt (230) der Funktionseinheit (200) verläuft, und wobei der wenigstens eine Niederhalter (220a-b) in der Funktionseinheit (200) in Bezug zur gedachten Achse (S) außerhalb des inneren Funktionsabschnitts (230) befindet.

5. Die Vorrichtung (2) gemäß einem der vorigen Ansprüche, wobei der wenigstens eine Sensor (400) einen Träger (410) und wenigstens eine auf dem Träger (410) angeordnete Leiterbahn (412a-b) umfasst.

6. Die Vorrichtung (2) gemäß dem vorigen Anspruch, wobei der wenigstens eine Sensor (400) eine Mehrzahl von Leiterbahnen (412a-b) umfasst, welche wenigstens abschnittsweise einer gedachten Umfangsstrecke (U) verlaufen.

7. Die Vorrichtung (2) gemäß Anspruch 5 oder 6, wobei der Träger (402) wenigstens abschnittsweise kreisringförmig ausgebildet ist und wenigstens eine Öffnung (418), insbesondere eine Durchgangsöffnung, umfasst, welche von der wenigstens einen Leiterbahn (412a-b) zumindest abschnittsweise umgeben ist.

8. Die Vorrichtung (2) gemäß einem der vorigen Ansprüche, wobei der wenigstens eine Sensor (400) in einer den Trockenraum (310) abschnittsweise begrenzenden Ausnehmung (128) des Körpers (100) aufgenommen ist, wobei die Ausnehmung (128) einer Außenkontur des wenigstens einen Sensors (400), insbesondere des Trägers (410) des Sensors (400) folgt.

9. Die Vorrichtung (2) gemäß einem der vorigen Ansprüche, wobei ein Leckagekanal den Trockenraum (310) mit einem Außenraum der Vorrichtung (2) verbindet.

10. Die Vorrichtung (2) gemäß einem der vorigen Ansprüche, wobei der wenigstens eine Sensor (400) dazu eingerichtet ist, wenigstens ein weiteres Signal zu ermitteln, welches einen Parameter des mit dem wenigstens einen Sensor (400) in Kontakt stehenden Fluids charakterisiert.

11. Die Vorrichtung (2) gemäß einem der vorigen Ansprüche, wobei eine Warnvorrichtung (500) der Vorrichtung (2) dazu eingerichtet ist, ein optisches und/oder akustisches Warnsignal zu erzeugen, sobald das Sensorsignal (S_400) den Eintritt von Prozessfluid in den Trockenraum (310) indiziert.

12. Die Vorrichtung (2) gemäß einem der vorigen Ansprüche, wobei die Funktionseinheit (200) einen weiteren Sensor (600) umfasst, welcher dazu eingerichtet ist, wenigstens ein Signal (S_600) zu erzeugen, welches wenigstens einen Parameter des in dem fluidführenden Abschnitt (302) befindlichen Prozessfluids charakterisiert.

13. Die Vorrichtung (2) gemäß einem der Ansprüche 1 bis 11, wobei die Funktionseinheit (200) einen Absperrkörper (260) und einen Prozessarmatur-Antrieb (262) für den Absperrkörper (260) umfasst, und wobei eine Position des Absperrkörpers (260) in Bezug zu einer Schließkontur (114) des Körpers (100) einen wirksamen Durchfluss zwischen wenigstens zwei Prozessfluid-Anschlüssen (102, 104) begrenzt.

## Claims

1. Process fluid technology device (2), comprising:
a body (100) having at least one fluid connection point (102, 104) which leads into a fluid channel (106) inside the body (100), the body (100) comprising at least one further opening (110) which is associated with a functional unit (200) and leads into the fluid channel (106); and
the functional unit (200) which is detachably arranged on the body (100) and closes the further opening (110) of the body (100) along a leaktight region (300), the leaktight region (300) separating a fluid-carrying portion (302) of the device (2) from a dry chamber (310) of the device (2), at least one sensor (400) arranged in the dry chamber (310) being designed to generate a sensor signal (S_400) which indicates an entry of process fluid into the dry chamber (310),
the functional unit (200) comprising at least one holding-down element (220a-b) which is supported, in particular spring-supported, on the functional unit (200) and presses the at least one sensor (400) onto a surface (120a-b) of the dry chamber (310) associated with the body (100),
**characterized in that**
the at least one holding-down element (220ab) comprises an electrically conductive distal contact (222a-b) which presses against an electrically conductive counter-contact (422a-b) of the sensor (400)

2. Device (2) according to claim 1, wherein a contour (212) associated with the functional unit (200), pressed onto a counter-contour (112) associated with the body (100), provides the leaktight region (300), and wherein the functional unit (200) is supported on the body (100) for pressing the contour (112) onto the counter-contour (112).

3. Device (2) according to claim 1 or 2, wherein the dry chamber (310) laterally surrounds the leaktight region (310) at least in some portions.

4. Device (2) according to claim 1, 2 or 3, wherein an imaginary axis (S) extending perpendicularly to the further opening (110) of the body (100) extends through an inner functional portion (230) of the functional unit (200), and wherein the at least one holding-down element (220a-b) is located in the functional unit (200) outside the inner functional portion (230) in relation to the imaginary axis (S).

5. Device (2) according to any of the preceding claims, wherein the at least one sensor (400) comprises a support (410) and at least one conducting track (412a-b) which is arranged on the support (410).

6. Device (2) according to the preceding claim, wherein the at least one sensor (400) comprises a plurality of conducting tracks (412a-b) which extend, at least in some portions, along an imaginary circumferential line (U).

7. Device (2) according to claim 5 or 6, wherein the support (402) is annular in shape at least in some portions and comprises at least one opening (418), in particular a through-opening, which is surrounded by the at least one conducting track (412a-b) at least in some portions.

8. Device (2) according to any of the preceding claims, wherein the at least one sensor (400) is received in a recess (128) of the body (100), which recess limits the dry chamber (310) in some portions, wherein the recess (128) follows an outer contour of the at least one sensor (400), in particular of the support (410) of the sensor (400).

9. Device (2) according to any of the preceding claims, wherein a leakage channel connects the dry chamber (310) to an external chamber of the device (2).

10. Device (2) according to any of the preceding claims, wherein the at least one sensor (400) is designed to detect at least one further signal which characterizes a parameter of the fluid which is in contact with the at least one sensor (400).

11. Device (2) according to any of the preceding claims, wherein a warning device (500) of the device (2) is designed to generate an optical and/or acoustic warning signal as soon as the sensor signal (S_400) indicates the entry of process fluid into the dry chamber (310).

12. Device (2) according to any of the preceding claims, wherein the functional unit (200) comprises a further sensor (600) which is designed to generate at least one signal (S_600) which characterizes at least one parameter of the process fluid which is located in the fluid-carrying portion (302).

13. Device (2) according to any of claims 1 to 11, wherein the functional unit (200) comprises a shut-off body (260) and a process valve actuator (262) for the shut-off body (260), and wherein a position of the shut-off body (260) in relation to a closing contour (114) of the body (100) limits an effective flow between at least two process fluid connection points (102, 104).

## Revendications

1. Dispositif (2) de la technologie des fluides de processus comprenant:
un corps (100) avec au moins un raccord de fluide (102, 104) qui mène à un canal de fluide (106) à l'intérieur du corps (100), dans lequel le corps (100) comprend au moins une autre ouverture (110) qui est associée à une unité fonctionnelle (200) et qui mène au canal de fluide (106); et
ladite unité fonctionnelle (200) qui est disposée de manière amovible sur le corps (100) et qui ferme ladite autre ouverture (110) du corps (100) le long d'une zone d'étanchéité (300), dans lequel la zone d'étanchéité (300) sépare une section de transport de fluide (302) du dispositif (2) d'une chambre de séchage (310) du dispositif (2), dans lequel au moins un capteur (400) disposé dans la chambre de séchage (310) est configuré pour générer un signal de capteur (S_400) qui indique une entrée de fluide de processus dans la chambre de séchage (310),
dans lequel ladite unité fonctionnelle (200) comprend au moins un dispositif de maintien vers le bas (220a-b) qui s'appuie, en particulier s'appuie de manière élastique, sur l'unité fonctionnelle (200) et qui plaque ledit au moins un capteur (400) contre une surface (120a-b) de la chambre de séchage (310), qui est associée au corps (100),
**caractérisé en ce que**
ledit au moins un dispositif de maintien vers le bas (220a-b) comprend un contact distal électriquement conducteur (222a-b) qui s'appuie contre un contre-contact électriquement conducteur (422a-b) du capteur (400).

2. Dispositif (2) selon la revendication 1, dans lequel un contour (212) associé à l'unité fonctionnelle (200) est pressé contre un contre-contour (112) associé au corps (100) et fournit ainsi ladite zone d'étanchéité (300), et dans lequel l'unité fonctionnelle (200) s'appuie sur le corps (100) afin de presser le contour (112) contre le contre-contour (112).

3. Dispositif (2) selon la revendication 1 ou 2, dans lequel la chambre de séchage (310) entoure latéralement, au moins par sections, la zone d'étanchéité (310).

4. Dispositif (2) selon la revendication 1, 2 ou 3, dans lequel un axe imaginaire (S) s'étendant perpendiculairement à ladite autre ouverture (110) du corps (100) traverse une section fonctionnelle interne (230) de l'unité fonctionnelle (200), et dans lequel ledit au moins un dispositif de maintien vers le bas (220a-b) dans l'unité fonctionnelle (200) est situé à l'extérieur de la section fonctionnelle interne (230) par rapport à l'axe imaginaire (S).

5. Dispositif (2) selon l'une quelconque des revendications précédentes, dans lequel ledit au moins un capteur (400) comprend un support (410) et au moins une piste conductrice (412a-b) disposée sur le support (410).

6. Dispositif (2) selon la revendication précédente, dans lequel ledit au moins un capteur (400) comprend une pluralité de pistes conductrices (412a-b) qui s'étendent au moins par sections le long d'un chemin circonférentiel imaginaire (U).

7. Dispositif (2) selon la revendication 5 ou 6, dans lequel le support (402) est réalisé au moins par sections en forme d'anneau de cercle et comprend au moins une ouverture (418), en particulier une ouverture traversante, qui est entourée au moins par sections par ladite au moins une piste conductrice (412a-b).

8. Dispositif (2) selon l'une quelconque des revendications précédentes, dans lequel ledit au moins un capteur (400) est logé dans un évidement (128) du corps (100), qui délimite par sections la chambre de séchage (310), dans lequel ledit évidement (128) suit un contour extérieur dudit au moins un capteur (400), en particulier du support (410) du capteur (400).

9. Dispositif (2) selon l'une quelconque des revendications précédentes, dans lequel un canal de fuite relie la chambre de séchage (310) à une chambre extérieure du dispositif (2).

10. Dispositif (2) selon l'une quelconque des revendications précédentes, dans lequel ledit au moins un capteur (400) est configuré pour détecter au moins un autre signal qui caractérise un paramètre du fluide en contact avec ledit au moins un capteur (400).

11. Dispositif (2) selon l'une quelconque des revendications précédentes, dans lequel un dispositif d'avertissement (500) du dispositif (2) est configuré pour générer un signal d'avertissement optique et/ou acoustique dès que le signal de capteur (S_400) indique l'entrée de fluide de processus dans la chambre de séchage (310).

12. Dispositif (2) selon l'une quelconque des revendications précédentes, dans lequel l'unité fonctionnelle (200) comprend un autre capteur (600) qui est configuré pour générer au moins un signal (S_600) qui caractérise au moins un paramètre du fluide de processus se trouvant dans la section de transport de fluide (302).

13. Dispositif (2) selon l'une quelconque des revendications 1 à 11, dans lequel l'unité fonctionnelle (200) comprend un corps d'arrêt (260) et un mécanisme d'entraînement d'armature de processus (262) pour le corps d'arrêt (260), et dans lequel une position du corps d'arrêt (260) par rapport à un contour de fermeture (114) du corps (100) délimite un passage effectif entre au moins deux raccords de fluide de processus (102, 104).
